# EUROPÄISCHE PATENTSCHRIFT

(11) **EP 0 963 273 B1**
(45) Veröffentlichungstag und Bekanntmachung des Hinweises auf die Patenterteilung: **05.02.2003**
(21) Anmeldenummer: 98913547.0
(22) Anmeldetag: 13.02.1998
(51) Int. Cl.: B23K 26/14

(54) **VERFAHREN UND VORRICHTUNG ZUM KONTINUIERLICHEN VERSCHWEISSEN VON AUF STOSS GEFÜHRTEN BÄNDERN ODER BLECHEN MITTELS LASERSTRAHL**
METHOD AND DEVICE FOR CONTINUOUS BUTT WELDING OF STRIPS AND SHEETS USING A LASER BEAM
PROCEDE ET DISPOSITIF DE SOUDAGE CONTINU ET BOUT A BOUT DE BANDES OU DE TOLES A L'AIDE D'UN FAISCEAU LASER

(30) Priorität: 28.02.1997 DE 19708047
(43) Veröffentlichungstag der Anmeldung: 15.12.1999
(73) Patentinhaber: ThyssenKrupp Stahl AG, 47166 Duisburg (DE)
(72) Erfinder: KOCH, Martin, D-47506 Neukirchen-Vluyn (DE); THIEM, Steffen, D-46569 Hünxe (DE); ZEIMES, Manfred, D-40723 Hilden (DE)
(74) Vertreter: Knauf, Rudolf, Dipl.-Ing.
(86) Internationale Anmeldenummer: EP9800841
(87) Internationale Veröffentlichungsnummer: WO98038003

(56) Entgegenhaltungen:
- EP-A- 0 450 349
- DE-A- 19 537 924
- DATABASE WPI Section Ch, Week 9445 Derwent Publications Ltd., London, GB; Class M23, AN 94-364758 XP002069931 & SU 1 824 268 A (TASHK AGRIC IRRIG MECH ENG INST)

## Beschreibung

Die Erfindung bezieht sich auf ein Verfahren zum kontinuierlichen Verschweißen von auf Stoß geführten Bändern oder Blechen mit einem Laserstrahl, dem am Schweißort Prozeßgas zugeführt wird, wobei die Schweißnaht in der Nähe des Schweißortes mit einem aufgedüsten Kühlmittel gekühlt wird.

Die Erfindung bezieht sich ferner auf eine Vorrichtung zum kontinuierlichen Verschweißen von auf Stoß geführten Bändern oder Blechen mit Führungs- und Fördermitteln für die Bänder bzw. Bleche sowie einer ortsfesten Laserstrahlquelle, der in Förderrichtung der Bänder bzw. Bleche eine Düsenanordnung mit einer auf den Schweißpunkt gerichteten Prozeßgasdüse und einer auf die unmittelbare Umgebung des Schweißortes gerichteten Kühlmitteldüse nachgeordnet ist.

Verfahren zum kontinuierlichen Verschweißen von auf Stoß geführten Bändern oder Blechen mittels Laserstrahl sind bekannt (DE 195 37 924 A1 (wird als nächstliegender Stand der Technik angesehen); EP 0 450 349 B1).

Bei einer dieser bekannten Vorrichtungen (DE 195 37 294 A1 (wird als nächstliegender Stand der Technik angesehen)) sind drei Düsen in Förderrichtung der Bänder hintereinander angeordnet, von denen über eine erste Düse Schutzgas dem Schweißort zugeführt wird. Über eine nachgeordnete Düse wird auf die Schweißnaht Inertgas geblasen. Über eine dritte Düse wird die Schweißnaht mit einem flüssigen Kühlmittel beaufschlagt. Das Inertgas der zweiten Düse und das flüssige Kühlmittel sind in einem gewissen Winkel von dem Schweißort weggerichtet. Das Inertgas der zweiten Düse erzeugt praktisch einen Gasvorhang, der den Schweißort gegenüber dem Kühlmittel abschirmt.

Eine solche Vorrichtung ist aufwendig, da sie drei separate Zuführungen für Gas bzw. Kühlmittel erforderlich macht. Nachteilig ist weiter, daß unter den gegebenen geometrischen Verhältnissen mit den drei Düsen die Kühlung nicht sehr nahe am Schweißort beginnen kann. Auch lassen sich die Verhältnisse nicht auf einfache Art und Weise prozeßabhängig ändern. Korrosionen lassen sich nur verhindern, wenn nach dem Kühlen das flüssige Kühlmittel von der Oberfläche des Bandes abgesaugt wird. Dafür ist eine aufwendige Absaugvorrichtung erforderlich.

Bei der anderen bekannten Vorrichtung (EP 0 450 349 Bl) besteht die Kühldüse aus einer Kühlplatte mit einer Vielzahl von Düsenöffnungen und einem bis in die Nähe des Schweißortes reichenden Schnabel mit ebenfalls einer Vielzahl von Düsenöffnungen. In diesem Fall wird als Kühlmittel Luft über die Düsenöffnungen aufgeblasen. Abgesehen von dem recht aufwendigen Aufbau dieser Kühlplatte läßt sich erfahrungsgemäß mit Luft nicht besonders intensiv kühlen.

Eine intensivere Kühlung des Schweißortes soll mittels eines aufgedüsten Kühlgemisches aus Gas und Flüssigkeit erzielt werden (SU 18 24 268 A1).

Der Erfindung liegt die Aufgabe zugrunde, ein Verfahren und eine Vorrichtung zum kontinuierlichen Verschweißen von auf Stoß geführten Bändern oder Blechen mit einem Laserstrahl zu schaffen, das bzw. die mit vergleichsweise einfachen Mitteln eine intensive Kühlung der Schweißnaht ermöglicht.

Diese Aufgabe wird verfahrensmäßig dadurch gelöst, daß als Kühlmittel ein Wasser-Gas-, insbesondere Wasser-Luft-Gemisch in Form eines sich in Richtung der Schweißnaht erstreckenden und in einer auf der Band- bzw. Blechebene senkrecht stehenden Ebene liegenden Flachstrahls verwendet wird, dessen in Strahlrichtung verlaufende vordere Kante mit dem Laserstrahl einen spitzen Winkel einschließt, wie in Anspruch 1 beschrieben.

Vorrichtungsmäßig besteht die Lösung darin, daß die Kühlmitteldüse eine Schlitzstrahldüse für ein Wasser-Gas-, insbesondere Wasser-Luft Gemisch ist, deren Flachstrahl in einer Ebene liegt, die senkrecht auf der Band- bzw. Blechebene steht, sich längs der Schweißnaht erstreckt und mit seinem vorderen Rand mit dem Laserstrahl einen spitzen Winkel einschließt, wie in Anspruch 5 beschrieben.

Bei der Erfindung ergibt sich im Vergleich zum Stand der Technik eine wesentlich bessere und leichter steuerbare Kühlintensität dadurch, daß nicht nur Gas bzw. Luft oder Wasser als Kühlmittel verwendet wird, sondern ein Gas-Wasser-, insbesondere Wasser-Luft Gemisch. Dafür wird neben der Düse für das Prozeßgas nur eine weitere Düse benötigt. Eine Abschirmung des Schweißortes gegenüber dem Kühlmittel mittels Inertgas ist nämlich nicht erforderlich. Da das Wasser in Form von Tröpfchen zugeführt wird, wird die Kühlwirkung wesentlich besser als bei einem Vollstrahl aus Flüssigkeit ausgenutzt. Eine physikalische Erklärung für diese Kühlwirkung dürfte sein, daß die aufgespritzten Tröpfchen eine sich auf dem Blech bildende Dampfschicht durchschlagen und so in unmittelbaren Kontakt mit der zu kühlenden Schweißnaht und ggf. deren Umgebung treten. Erfahrungen haben gezeigt, daß man bei gleicher Kühlwirkung mit nur einem Bruchteil von 1/10 bei Wasser und einem Bruchteil von 1/40 bei Luft gegenüber einer Kühlung nur mit Wasser und Luft auskommt. Diese verbesserte Kühlwirkung ist darüber hinaus auch darauf zurückzuführen, daß mit dem Flachstrahl die Kühlwirkung im wesentlichen auf den Bereich der Schweißnaht beschränkt ist. Aufgrund der besonderen Geometrie des Flachstrahls, bei der der vordere Rand des Flachstrahls mit dem Laserstrahl einen spitzen Winkel einschließt und der vorzugsweise durch eine trapezförmige Aufweitung des Flachstrahls verwirklicht sein kann, ist gewährleistet, daß mit der Kühlung in unmittelbarer Nähe des Schweißpunktes begonnen wird. Wegen dieser frühzeitig beginnenden Kühlung kann die Schweißgeschwindigkeit erhöht und damit die Produktivität verbessert werden. Bei unverändertem Abstand der Düse vom Blech kann durch Verschwenken der Düse in der Ebene der Schweißnaht der Ort des Beginns der Kühlung verändert werden. Eine Veränderung des Ortes der Kühlung ist allerdings auch bei unveränderter Winkelstellung der Düse durch horizontale oder vertikale Abstandsveränderung möglich. Da kein großes Volumen an flüssigem Kühlmittel zugeführt wird, wird durch die in unmittelbarer Nähe des Schweißpunktes beginnende Kühlung die Schweißqualität nicht beeinträchtigt. Außerdem ist keine aufwendige Absaugung erforderlich.

Nach einer Ausgestaltung der Erfindung hat sich als vorteilhaft erwiesen, wenn die vom Flachstrahl beaufschlagte Fläche der Schweißnaht ein Längen/Breitenverhältnis von 1:5 bis 1:30 hat. Ferner hat sich als vorteilhaft erwiesen, wenn das Massenstromverhältnis von Wasser/Luft bei 0,1 bis 3, vorzugsweise bei 0,5, liegt. Dieses Massenstromverhältnis läßt sich auf verschiedene Art und Weise einhalten. So kann es durch die Düse selbst vorgegeben sein, es kann aber auch über den Förderdruck und die Fördergeschwindigkeit der beiden Partner Wasser/Luft variiert werden.

Die Schlitzstrahldüse ist vorzugsweise als Injektordüse ausgebildet. Bewährt hat sich eine Schlitzstrahldüse, die ein zapfenförmiges Mundstück mit angefastem stirnseitigen Rand und einem stirnseitigen, bis in den angefasten Rand hinein sich erstreckenden Schlitz aufweist.

Im folgenden wird die Erfindung anhand einer ein Ausführungsbeispiel darstellenden Zeichnung näher erläutert. Im einzelnen zeigen:
- Figur 1: eine Vorrichtung zum kontinuierlichen Verschweißen von auf Stoß geführten Bändern oder Blechen in schematischer Darstellung in Seitenansicht,
- Figur 2: eine Düsenanordnung mit Prozeßdüse und Schlitzstrahldüse der Vorrichtung der Figur 1 in Seitenansicht,

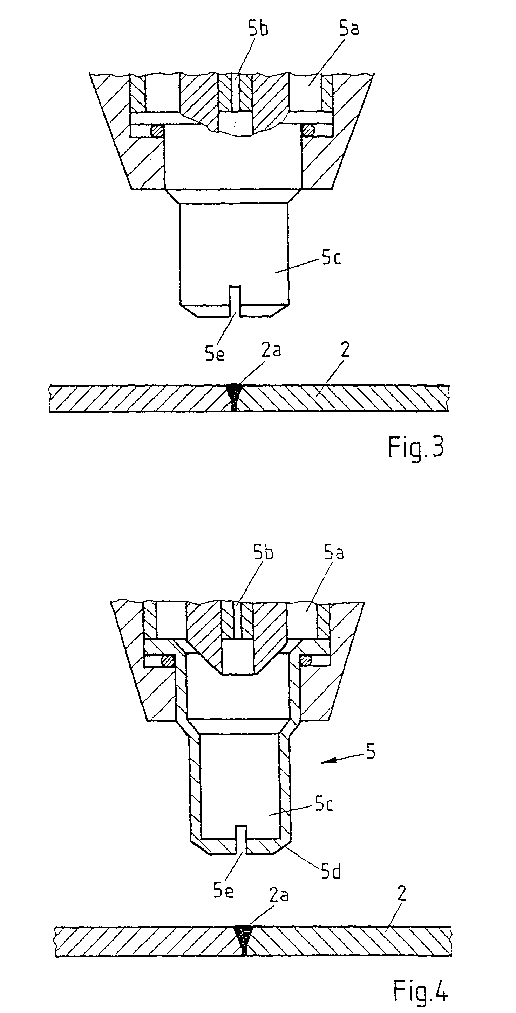

- Figur 3: die Schlitzstrahldüse gemäß Figur 2 in Rückansicht
**und**
- Figur 4: die Schlitzstrahldüse gemäß Figur 2 im Axialschnitt nach Linie A-A der Figur 2.

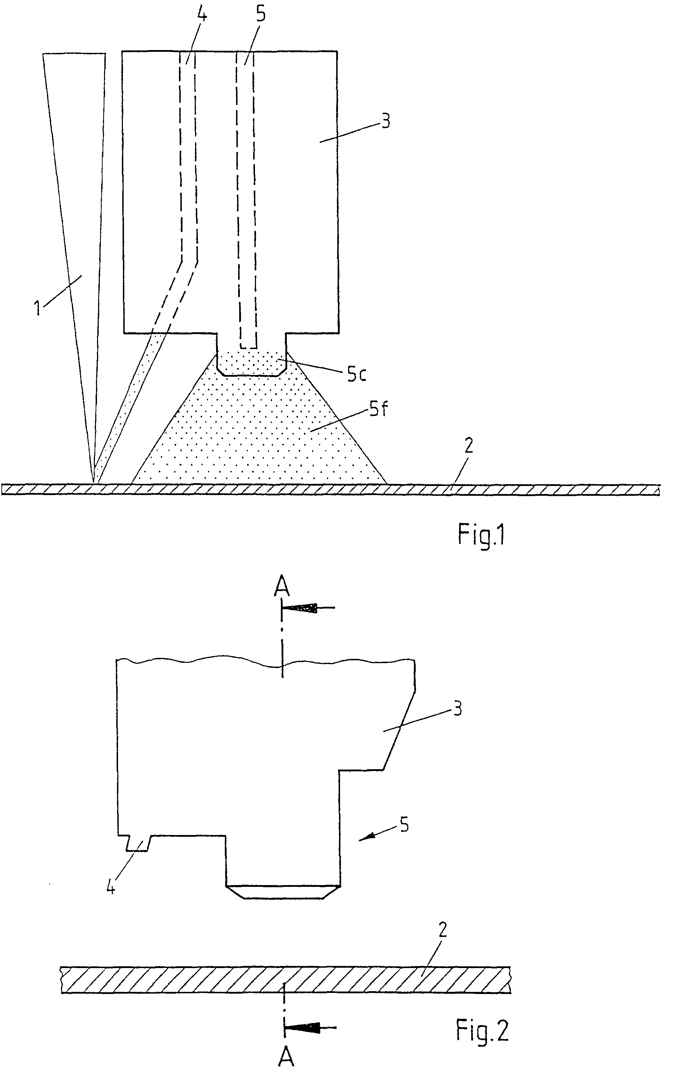

Die Darstellung der Vorrichtung gemäß Figur 1 verläuft durch die Schweißnaht. Ein Laserstrahl 1 ist senkrecht auf die durch nicht dargestellte Förder- und Führungsmittel geführten und im Stumpfstoß 2a miteinander zu verschweißenden Bleche 2 gerichtet. Dem Laserstrahl 1 ist in Schweißrichtung eine Düsenanordnung 3 nachgeordnet, die als Duplexdüse ausgebildet ist und eine erste Düse 4 für Prozeßgas mit geneigter Austrittsrichtung hat. Das Prozeßgas wird dem Schweißpunkt zugeführt. Dieser ersten Düse 4 ist eine zweite Düse 5 für ein Wasser-Luft-Gemisch nachgeordnet.

Die Düse 5 ist als pneumatische Zerstäuberdüse mit innerer Mischung ausgebildet. Sie weist einen Ringkanal 5a für Luft und einen zentralen Kanal 5b für Wasser auf. In ihrem zylinderförmigen Mundstück findet eine Verwirbelung von Wasser und Luft statt. Das Mundstück 5c weist stirnseitig einen angefasten Rand 5d mit einem schmalen stirnseitigen Schlitz 5e auf, der sich bis in den Fasenbereich hinein erstreckt.

Diese Ausbildung der Schlitzstrahldüse 5 läßt aus dem Schlitz 5e einen sich trapezartig erweiternden Flachstrahl 5f austreten, der sich in Richtung der Schweißnaht 2a erstreckt. Aufgrund des Öffnungswinkels reicht dieser Flachstrahl 5f bis nahe an den Schweißpunkt heran. Durch Vergrößern des Öffnungswinkels kann der Abstand zwischen Schweißpunkt und Kühlbeginn verkleinert werden. Der Abstand kann aber auch dadurch variiert werden, daß der Abstand der Düse 5 von dem Blech 2 geändert wird oder die Düse 5 parallel zur Blechoberfläche und in Richtung der Schweißnaht verlagert wird. Auch das Verschwenken der Düse 5 um eine quer zur Schweißnaht 2a und parallel zum Blech 2 liegende Drehachse ermöglicht das Variieren des Abstandes zwischen dem Schweißpunkt und dem Kühlbeginn.

Kombiniert mit der Schlitzstrahldüse kann auch eine andere Düsenform eingesetzt werden, um möglichst nahe an den Schweißort heranzukommen. So können Düsen eingesetzt werden, die auch vor und neben dem Schweißort das Blech kühlen. Eine solche Kühlung ist auch sinnvoll, um einem Auseinander- oder Übereinanderlaufen der Stoßkanten entgegenzuwirken. Eine derartige Kühlung ist aber auch insofern nützlich, als es ein Ausdehnen der Schweißwärme weit in das Blech hinein verhindert. Bei beschichteten Blechen, insbesondere verzinkten Blechen, wird nämlich angestrebt, daß der Laserstrahl möglichst wenig Zink neben der Schweißnaht verdampft, um die Fernschutzwirkung des verbleibenden Zinks auf die Schweißnaht auszunutzen. Als Düse eignet sich für diese Zwecke zum Beispiel eine Ringstrahldüse. Mit dem Ringstrahl einer solchen Ringstrahldüse erfolgt eine zusätzliche Kühlung des Bleches vor und neben dem Schweißort.

## Patentansprüche

1. Verfahren zum kontinuierlichen Verschweißen von auf Stoß geführten Bändern oder Blechen (2) mit einem Laserstrahl (1), dem nachlaufend am Schweißort Prozeßgas zugeführt wird, wobei die Schweißnaht (2a) in der Nähe des Schweißortes mit einem aufgedüsten Kühlmittel gekühlt wird,
**dadurch gekennzeichnet, daß** als Kühlmittel ein Wasser-Gas-Gemisch in Form eines sich in Richtung der Schweißnaht erstreckenden und in einer auf der Band- bzw. Blechebene senkrecht stehenden Ebene liegenden Flachstrahls (5f) verwendet wird, dessen in Strahlrichtung verlaufende vordere Kante mit dem Laserstrahl (1) einen spitzen Winkel einschließt.

2. Verfahren nach Anspruch 1,
**dadurch gekennzeichnet, daß** der Flachstrahl (5f) in Strahlrichtung trapezförmig aufgeweitet ist.

3. Verfahren nach Anspruch 1 oder 2,
**dadurch gekennzeichnet, daß** die vom Flachstrahl (5f) beaufschlagte Fläche der Schweißnaht (2a) ein Längen/Breitenverhältnis von 1:5 bis 1:30 hat.

4. Verfahren nach einem der Ansprüche 1 bis 3,
**dadurch gekennzeichnet, daß** das Massenstromverhältnis des Wasser-Gas-Gemisches 0,1 bis 3, vorzugsweise 0,5, beträgt.

5. Vorrichtung zum kontinuierlichen Verschweißen von auf Stoß geführten Bändern oder Blechen (2) mit Führungsund Fördermitteln sowie einer ortsfesten Laserstrahlquelle (1), der in Förderrichtung der Bänder bzw. Bleche (2) eine Düsenanordnung (3) mit einer auf den Schweißpunkt gerichteten Prozeßgasdüse (4) und einer auf die unmittelbare Umgebung des Schweißortes (2a) gerichteten Kühlmitteldüse (5) nachgeordnet ist,
**dadurch gekennzeichnet, daß** die Kühlmitteldüse (5) eine Schlitzstrahldüse für ein Wasser-Gas-Gemisch ist, deren Flachstrahl in einer Ebene liegt, die senkrecht auf der Band- bzw. Blechebene steht, sich längs der Schweißnaht erstreckt und mit seinem vorderen Rand mit dem Laserstrahl einen spitzen Winkel einschließt.

6. Vorrichtung nach Anspruch 5,
**dadurch gekennzeichnet, daß** der Flachstrahl sich von der Düsenmündung zur Blechebene trapezförmig erweitert.

7. Vorrichtung nach Anspruch 5 oder 6,
**dadurch gekennzeichnet, daß** die Schlitzstrahldüse (5) als pneumatische Zerstäuberdüse mit innerer Mischung ausgebildet ist.

8. Vorrichtung nach einem der Ansprüche 5 bis 7,
**dadurch gekennzeichnet, daß** die Schlitzstrahldüse (5) ein zapfenförmiges Mundstück (5c) mit angefaßtem stirnseitigen Rand (5d) und einem stirnseitigen, bis in den Rand sich erstreckenden Schlitz (5e) aufweist.

## Claims

1. A method for continuously welding together abutting strips or sheets (2) by means of a laser beam (1) to which process gas is supplied at the welding point, wherein the welding seam (2a) is cooled with a sprayed-on coolant in the vicinity of the welding point, **characterized in that** the coolant used consists of a water/gas mixture in the form of a flat jet (5f) that extends in the direction of the welding seam and lies in a plane that extends perpendicular to the plane of the strip or sheet, wherein the leading edge of the flat jet which extends in the direction of said jet forms an acute angle with the laser beam (1).

2. The method according to Claim 1, **characterized in that** the flat jet (5f) trapezoidally widens in the direction of the jet.

3. The method according to Claim 1 or 2, **characterized in that** the surface of the welding seam (2a) which is subjected to the flat jet (5f) has a length-to-width ratio of 1:5 to 1:30.

4. The method according to one of Claims 1-3, **characterized in that** the mass flow ratio of the water/gas mixture is 0.1 to 3, preferably 0.5.

5. An apparatus for continuously welding together abutting strips or sheets (2), with guiding and conveying means, and with a fixed laser radiation source (1) that, viewed in the conveying direction of the strips or sheets (2), is followed by a nozzle arrangement (3) with a process gas nozzle (4) that is directed at the welding point and a coolant nozzle (5) that is directed at the immediate vicinity of the welding point (2a), **characterized in that** the coolant nozzle (5) consists of a slot nozzle for a water/gas mixture, wherein the flat jet emerging from this slot nozzle extends along the welding seam and lies in a plane that extends perpendicular to the plane of the strip or sheet, and wherein the leading edge of the flat jet forms an acute angle with the laser beam.

6. The apparatus according to Claim 5, **characterized in that** the flat jet trapezoidally widens from the nozzle aperture to the plane of the sheet.

7. The apparatus according to Claim 5 or 6, **characterized in that** the slot nozzle (5) is realized in the form of a pneumatic atomizing nozzle with interior mixing.

8. The apparatus according to one of Claims 5-7, **characterized in that** the slot nozzle (5) has a pin-shaped mouthpiece (5c) with a chamfered edge on its end face and a slot (5e) in the end face which extends up to said edge.

## Revendications

1. Procédé de soudage continu de bandes ou de tôles (2) amenées en aboutement, avec un faisceau laser (1), auquel un gaz de traitement est envoyé en aval du point de soudure, le cordon de soudure (2a) étant refroidi à proximité du lieu de soudure à l'aide d'un fluide de refroidissement délivré par une buse, **caractérisé en ce qu'**on utilise comme fluide de refroidissement un mélange eau-gaz sous la forme d'un jet plat (5f) qui s'étend en direction du cordon de soudure et est situé dans un plan perpendiculaire au plan de la bande ou de la tôle, et dont le bord avant, qui s'étend dans la direction du faisceau, fait un angle aigu avec le faisceau laser (1).

2. Procédé selon la revendication 1, **caractérisé en ce que** le jet plat (5f) s'élargit en forme de trapèze dans la direction du jet.

3. Procédé selon la revendication 1 ou 2, **caractérisé en ce que** la surface, qui est chargée par le jet plat (5f), du cordon de soudure (2a) possède un rapport longueur/largeur compris entre 1:5 et 1:30.

4. Procédé selon l'une des revendications 1 à 3, **caractérisé en ce que** le rapport des débits massiques dans le mélange eau-gaz est compris entre 0,1 et 3 et de préférence est égal à 0,5.

5. Procédé pour le soudage continu de bandes ou de tôles (2) amenées en aboutement, comportant des moyens de guidage et d'entraînement, ainsi qu'une source fixe de faisceau laser (1), en aval de laquelle est disposé, dans la direction d'entraînement des bandes et des tôles (2), un dispositif à buse (3) comportant une buse (4) délivrant un gaz de traitement et dirigée sur le point de soudure, et une buse (5) délivrant un fluide de refroidissement et dirigé sur l'environnement immédiat du lieu de soudage (2a), **caractérisé en ce que** la buse (5) délivrant le fluide de refroidissement est une buse produisant un jet défini par une fente pour un mélange eau-gaz, dont le jet plat est situé dans un plan qui est perpendiculaire au plan de la bande ou de la tôle, s'étend le long du cordon de soudure et fait par son bord avant, un angle aigu avec le faisceau laser.

6. Dispositif selon la revendication 5, **caractérisé en ce que** jet plat s'élargit avec une forme trapézoïdale depuis l'embouchure de la buse en direction du plan de la tôle.

7. Dispositif selon la revendication 5 ou 6, **caractérisé en ce que** la buse (5) à fente définissant le jet est agencée sous la forme d'une buse pneumatique de pulvérisation, dans laquelle est exécuté un mélange interne.

8. Dispositif selon l'une des revendications 5 à 7, **caractérisé en ce que** la buse (5) délivrant un jet défini par une fente possède un embout de forme tubulaire (5c) comportant un bord frontal biseauté (5d) et une fente frontale (5e) qui s'étend juste que dans le bord.
